# EUROPEAN PATENT APPLICATION

(11) **EP 1 291 776 A2**
(43) Date of publication of application: **12.03.2003**
(21) Application number: 02251300.6
(22) Date of filing: 25.02.2002
(51) Int. Cl.: G06F 12/10

(54) **Address translation**

(30) Priority: 30.03.2001 GB 0108106
(71) Applicant: Siroyan Limited, London W5 3AY (GB)
(72) Inventor: Topham, Nigel Peter, Wokingham RG40 4PQ (GB); Lim, Seow Chuan, Twyford, Berkshire RG10 0LW (GB)
(74) Representative: Hitching, Peter Matthew

(57) **Abstract**

A processor, and a method of accessing memory in a processor, are disclosed. The processor is arranged to generate virtual addresses for conversion into physical addresses for accessing physical memory, the physical memory comprising a first memory portion (101), and a second memory portion which is part of the same memory level as the first memory portion. When a virtual address is generated, part of that virtual address is converted into a partial physical address and a memory location in the first memory portion (101) is accessed using the partial physical address. In parallel with the memory access, a check may be carried out to determine whether the partial physical address is correct.

## Description

The present invention relates to an address translation technique for use with a processor which has access to separate memory portions, such as on-chip memory and external memory, and which operates using virtual memory. The invention has particular application in a "system-on-chip" device in which a processor and a quantity of memory are provided in the same integrated circuit.

System-on--chip devices typically comprise a processor and a quantity of random access memory (RAM) provided together in a single semiconductor integrated circuit, or chip. Since the amount of on-chip memory that can be provided may be limited, further memory at the same memory level may be provided externally to the chip, to which the processor also has access.

If the processor operates using virtual memory, then addresses generated by the processor are virtual addresses which do not correspond directly with the physical addresses of the memory to which the processor has access. A translation process is used to convert the virtual addresses generated by the processor into the physical addresses.

The need for virtual addresses to be translated into physical addresses may give rise to a delay between a virtual address being generated and the corresponding memory location being accessed. This leads to an undesirably long access time when accessing memory, which may in turn may reduce the overall performance of the processor.

It is therefore desirable to reduce the time between a virtual address being generated and the area in memory corresponding to that address being accessed. In particular it is desirable to reduce the time taken to access a particular memory portion, such as on-chip memory, which is a subset of the total memory accessible by the processor.

According to the present invention there is provided a processor which is arranged to generate virtual addresses for conversion into physical addresses for accessing physical memory, the physical memory comprising a first memory portion and a second memory portion which are part of the same memory level, the processor comprising:
generating means for generating a virtual address;
converting means for converting part of the virtual address into a partial physical address; and
accessing means for accessing memory in the first memory portion using the partial physical address.

By providing that only part of the virtual address is converted into a partial physical address, and using the partial physical address to access the first memory portion, the time taken for address translation can be reduced in comparison to the case where a full translation takes place. This in turn can speed up access to the first memory portion, which may improve the overall performance of the processor.

The processor's memory may have a simple one-level arrangement, or alternatively the processor's memory may be arranged in a hierarchical structure comprising a plurality of levels, with each level holding a subset of the data from the level below it. In either case, by dividing the memory of a particular memory level into two or more memory portions, one of those memory portions can be made a fast access memory portion, for example by providing that memory portion as on-chip memory. This may be appropriate, for example, where there are physical constraints which prevent the whole of the memory of that memory level from being provided on-chip.

Preferably (in the case where the partial translation is correct) the partial physical address is sufficient to identify uniquely a memory location in the first memory portion, but not in the whole of the physical memory. In this way, on the assumption that the required physical address is actually in the first memory portion, it can be made certain that the correct address in the first memory portion is accessed.

In one implementation, memory paging is used for the virtual memory and the physical memory, and thus an address may comprise a frame number and an offset, the offset being the same for a corresponding virtual address and physical address. The partial physical address may then comprise part of the physical frame number (the partial physical frame number) and the offset. In this implementation, the converting means may comprise a lookup table, and an entry in the lookup table may comprise part of the frame number of a virtual address and part of the frame number of the physical address.

In certain circumstances, for example where it is known in advance that the virtual address maps to the first memory portion, or where virtual addresses only map to the first memory portion, the partial translation may be sufficient to identify the correct physical address, in which case no further action need be taken.
However, in most cases a virtual address may map to anywhere in the physical memory, and it is not known in advance which part of memory it is mapped to. In this case, a check may need to be carried out to confirm (or otherwise) that the partial translation is correct. Thus the processor may further comprise verifying means for verifying that a physical address of memory accessed by the accessing means corresponds to the virtual address generated by the generating means.

If verifying means determines that the partial translation was correct, then no corrective action need be taken. However, if the verifying means determines that the partial translation was incorrect, then the appropriate corrective action may need to be taken. Such action may include discarding or ignoring any data which was read by the accessing means, and thus the processor may be arranged to discard or to ignore data read from memory if the verifying means determines that the partial translation was incorrect.

If the verifying means determines that the partial translation was incorrect (because the physical address of memory accessed by the accessing means does not correspond to the virtual address generated by the generating means), then it may be desired to provide a new mapping of the virtual address to a physical address in the first memory portion. In this way, if that virtual address is used again (and the mapping has not been superceded by another mapping to the same physical address), then the corresponding physical address will be in the first memory portion. Thus the processor may further comprise allocating means for allocating a virtual address to a physical address in the first memory portion in response to an output from the verifying means. This is particularly advantageous where the generated addresses display temporal locality, that is, a tendency for the same address to be generated more than once in a short period of time.

In the case where memory paging is used, the allocating means may be arranged to allocate a page of virtual memory to a page of physical memory in the first memory portion. In this case, if any virtual address from within the virtual page is generated in the future (and the mapping has not been superceded), then the corresponding physical address will be in the first memory portion. This is particular advantageous where generated virtual addresses display spatial locality, that is, where there is a tendency for successive virtual addresses to be close to each other.

The allocating means may be arranged such that no two virtual pages can be mapped to the first memory portion at the same time if they have addresses in which a given subset of the address bits are the same. By imposing this constraint on the allocation of pages, the logic required for performing the partial address translation can be simplified. For example, if the number of physical pages in the first memory portion is 2^{*n*} (or less) then the number of predetermined bits may be n, and an n-bit lookup table having 2^{*n*} entries may be used for the partial address translation.

To ensure that future partial translations are correct, the processor may further comprise means for updating the converting means when a virtual address is allocated to a physical address. For example, if the converting means comprises a lookup table, the processor may comprise means for loading new entries into the lookup table. Furthermore, to ensure that future checks on partial translations are carried out correctly, the processor may further comprise means for updating the verifying means when a virtual address is allocated to a physical address. For example, if the verification means comprises a lookup table, the processor may comprise means for loading new entries into that lookup table.

If necessary, when a virtual address is allocated to a new physical address in the first memory portion, data previously held in that physical address may be stored elsewhere, and data corresponding to the virtual address may be loaded into that physical address. If memory paging is used, data held in the physical page may be stored elsewhere, and data corresponding to the virtual page may be loaded into the physical page.

The verifying means may comprise means for converting the partial physical address into at least part of a virtual address, and means for comparing the at least part of the virtual address with the virtual address generated by the generating means. For example, the means for converting the partial physical address may comprise a lookup table, and, if memory paging is used, an entry in this lookup table may comprise a partial physical frame number and a virtual frame number. The lookup table may be directly indexed, if desired.

Alternatively, the verifying means may comprise means for converting the virtual address generated by the generating means into at least part of a physical address, and means for comparing the at least part of the physical address with the physical address of memory accessed by the accessing means. The means for converting the virtual address may comprise a lookup table, and an entry in this lookup table may comprise a virtual frame number and a corresponding physical frame number. The lookup table may be associatively indexed, if desired.

The accessing means may be arranged to read data from the memory. In this case, since only a read operation takes place, if the verifying means later determines that the partially-translated address is incorrect, then no data is corrupted and the incorrectly-read data can simply be discarded or ignored. However, in certain circumstances it may also be possible for a write operation to take place. For example, if it is known that the area of memory which is to be accessed does not contain any valid data (for example because of a recent reset), then a write operation may take place.

The processor may further comprise means for determining whether the virtual address generated by the generating means is within a range of addresses of the first memory portion, and means for disabling access to the first memory portion if the virtual address is outside of the range. This may prevent an unnecessary or undesirable memory access from taking place. Such means may also allow the partial translation mechanism to operate with write operations as well as with read operations, since if the virtual address does not map to the first memory portion, then the write operation will not take place.

The processor may be arranged to operate on successive clock cycles, and the converting means may be arranged to convert part of the virtual address into the partial physical address in the same clock cycle as the generating means generates the virtual address. In this way, access to the first memory portion can take place in the clock cycle after the address is generated, without having to wait a further clock cycle for a full address translation to take place.

The processor may be arranged to operate on successive clock cycles, and the verifying means may be arranged to verify that a physical address of memory accessed by the accessing means corresponds to the virtual address generated by the generating means in the same clock cycle as the accessing means accesses the memory in the first memory portion. Thus the address verification operation may be performed in parallel with the memory access, so that little or no additional time is required for the verification.

Preferably the processor is a pipelined processor and the means for accessing memory is part of the processor pipeline. In this way, the access path to the first memory portion can be inserted into the processor pipeline, which may increase the speed of access to the first memory portion.

The processor may be formed on a chip as part of a system-on-chip device, and the first memory portion may be on-chip memory while the second memory portion may be external memory. Thus, in a second aspect of the invention, there is provided a system-on-chip device comprising a processor in any of the forms described above, the device further comprising said first memory portion which is provided as on-chip memory, and an interface for accessing said second memory portion, which is external memory. The first memory portion may be on-chip RAM, such as synchronous RAM.

Analogous method aspect of the invention are also provided, and thus according to a third aspect of the present invention there is provided a method of accessing memory in a processor which generates virtual addresses for conversion into physical addresses for accessing physical memory, the physical memory comprising a first memory portion and a second memory portion which are part of the same memory level, the method comprising the steps of:
generating a virtual address;
converting part of the virtual address into a partial physical address; and
accessing memory in the first memory portion using the partial physical address.

Preferably, the method further comprises the step of verifying that the physical address of the memory accessed in the accessing step corresponds to the virtual address generated in the generating step. Other method features which correspond to the processor features described above may also be provided.

At least some of the functions described above may be carried out by software, for example, part of the operating system, and thus the invention also provides an operating program comprising program portions for carrying out any of the methods described herein, and a computer readable medium having stored thereon a program comprising program portions for carrying out any of the methods described herein.

Preferred features of the present invention will now be described, purely by way of example, with reference to the accompanying drawings, in which:-
Figure 1 is a block diagram of parts of a processor embodying the present invention;
Figure 2 shows an example of mappings of virtual memory to physical memory;
Figure 3 shows an example of a page table entry (PTE) ;
Figure 4 shows an un-optimised sequence of pipeline stages for on-chip memory access;
Figure 5 shows two virtual addresses;
Figure 6 is a block diagram of parts of a processor in a first embodiment of the invention;
Figures 7 to 13 show examples of the contents of the lookup tables in Figure 6 under various conditions; and
Figure 14 is a block diagram of parts of a processor in a second embodiment of the invention.

Functional blocks which are shown in the figures may be implemented as either hardware or software, or a combination of the two.

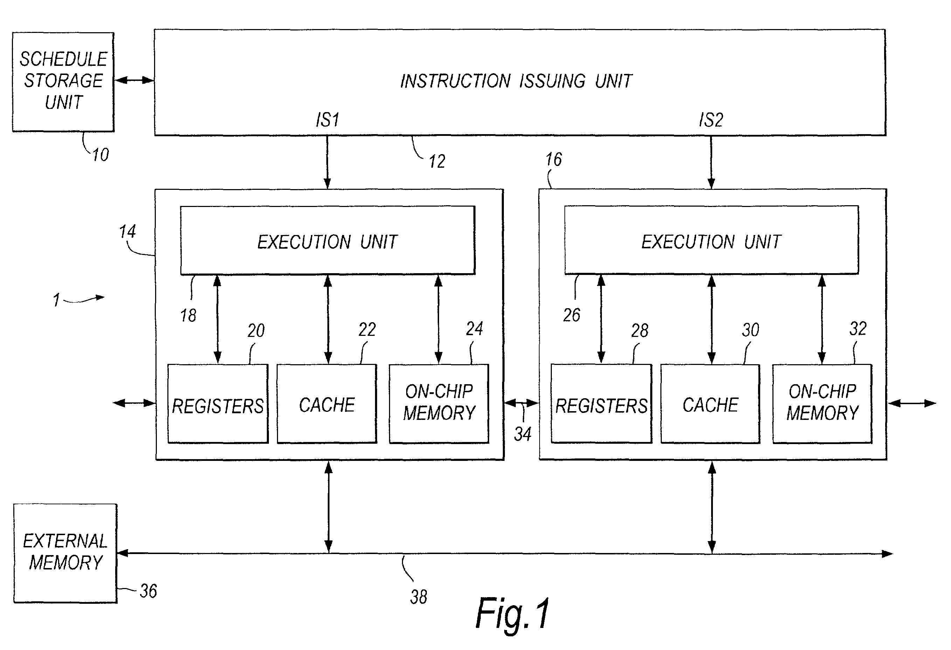

Figure 1 is a block diagram of a processor embodying the present invention. The processor is part of a system-on-chip device, in which the processor, together with a quantity of local memory, is provided on a single chip (integrated circuit). In this example, the processor is a very long instruction word (VLIW) processor which is designed to execute long instructions which may divided into smaller instructions.

Referring to Figure 1, processor 1 comprises schedule storage unit 10, instruction issuing unit 12, and first and second computational units 14, 16. The instruction issuing unit 12 has two issue slots IS1, IS2 connected respectively to the computational units 14, 16. Computational unit 14 comprises execution unit 18, a set of registers 20, cache memory 22 and on-chip RAM 24; computational unit 16 comprises execution unit 26, a set of registers 28, cache memory 30 and on-chip RAM 32. The computational units are connected to each other via a bus 34. Each of the computational units is also connected to an external memory 36 (such as RAM) via bus 38.

In operation, an instruction packet for execution is passed from the schedule storage unit 10 to the instruction issuing unit 12. The instruction issuing unit 12 divides the instruction packet into its constituent instructions, and issues the two instructions to the computational units 14, 16 via the issue slots IS1 and IS2 respectively. The computational units 14, 16 then execute the various instructions simultaneously. In this way, different parts of a long instruction are processed in parallel.

In alternative embodiments, two or more execution units are provided in each computational unit. Furthermore, while two computational units 14, 16 are shown in Figure 1, a single computational unit, or more than two computational units, may be provided.

Each of the computational units 14, 16 uses a pipelining technique to maximise the rate at which it processes instructions. Pipelining works by implementing each of a plurality of phases of instruction execution as a single pipeline stage. Instructions flow through successive pipeline stages, in a production-line fashion, with all partially-completed instructions moving one stage forward on each processor clock cycle. Instructions complete execution when they reach the end of the pipeline.

The processor's memory is arranged in a hierarchical structure, with the cache memories 22, 30 (which are small, fast memories) being the top level. The next level down is formed by the on-chip memories 24, 32 together with the external memory 36. The on-chip memories 24, 32 thus form part of the same memory level as the external memory 36 (in this case, a RAM memory level). A further memory level may be provided, for example, in the form of a hard disk (not shown). Each level holds a subset of the data from the level below it, while different parts of memory at the same level generally hold different data.

The processor is designed to operate using virtual memory. Virtual memory is an imaginary memory area which does not correspond directly to the physical memory to which the processor has access. Virtual addresses generated by the processor are translated into physical addresses for accessing physical memory locations in the various memories 24, 32 and 36. Virtual memory is used to allow portability of programs between processors, to provide protection between users and programs, and to create the illusion of a large memory area.

The virtual memory, and the physical memory to which it is mapped, are both divided into fixed size pages. The offset of an address within a page is the same for virtual memory and physical memory. Thus a virtual address may be broken down into a virtual page number (or frame number) and an offset. The translation of a virtual address into a physical address reduces to the translation of the virtual frame number to the physical frame number. A page table is used to translate virtual frame numbers to physical frame numbers. A typical system may have a page table for each process and a further page table for the operating system. For each page of virtual memory that is mapped to physical memory there exists an entry in the page table, known as a page table entry (PTE), which contains the virtual frame number and the physical frame number to which it is mapped. To speed up the translation process, the most recently used PTEs are stored in a cache of PTEs, known as a translation lookaside buffer (TLB). As a refinement, a virtual page may be larger than a physical page, and each virtual page may map to two or more physical pages.

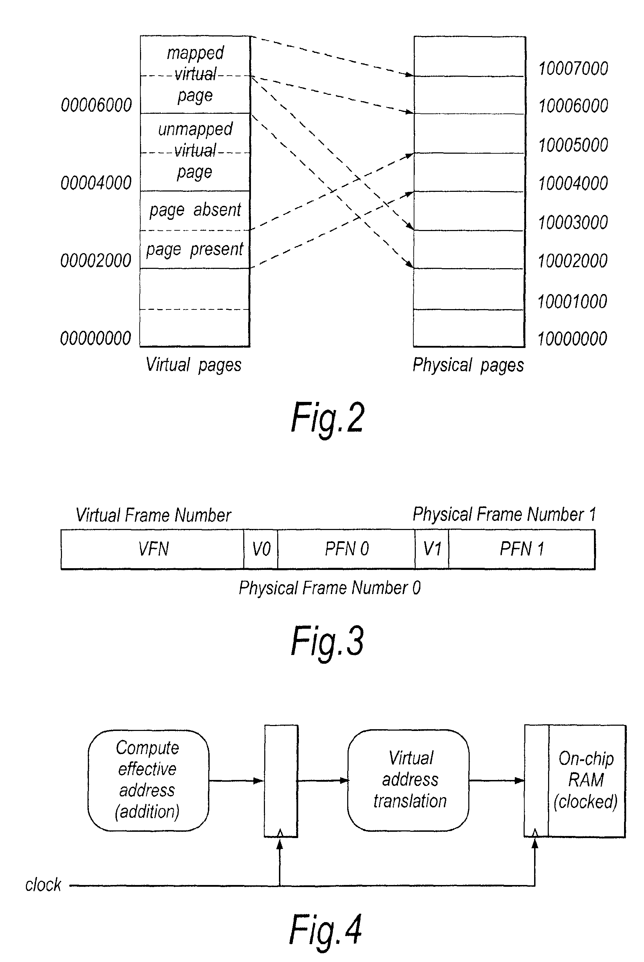

Figure 2 shows an example of how certain pages of virtual memory may map to physical pages of on-chip memory. In this example, the virtual and physical addresses are 32-bits wide, and there are 32 kbytes of local memory. Each virtual page is 8 kbytes in size, and maps to two physical pages, each of 4 kbytes size. The virtual pages are addressed from 00000000 to 00007FFF, and the physical pages are addressed from 10000000 to 10007FFF (all addresses are in hexadecimal notation). Referring to Figure 2, the virtual page at address 00006000 has its upper half mapped to the physical page at address 10006000 and its lower half mapped to the physical page at address 10002000; the virtual page at address 00004000 is unmapped; the virtual page at address 00002000 has its lower half mapped to the physical page at address 10004000 and its upper half is unmapped; and the virtual page at address 00000000 is unmapped.

In the scheme shown in Figure 2, the 12 least significant bits (bits 0 to 11) of a virtual address are the same as the 12 least significant bits of a physical address. The virtual frame number is obtained from bits 12 to 31 of the virtual address of the page, and the physical frame number is obtained from bits 12 to 31 of the physical address of the page. Each PTE contains the virtual frame number, and the frame numbers of the two physical pages to which the virtual page maps. In addition, there is a validating bit associated with each physical page number. A PTE for such a scheme is shown in Figure 3.

In order to translate a virtual address into a physical address, the PTE for that address is consulted in either the TLB, or the page table if the PTE is not in the TLB. In theory, this must be done before any access to memory, although, as will be described, in certain circumstances it may be possible to make an initial assumption about the correct physical address without performing a full address translation.

In a system-on-chip device, it may be desirable to incorporate an access path to on-chip cache memory into the processor pipeline, so that access to the on-chip cache can take place in one pipeline stage. If a quantity of on-chip RAM is provided, then it may also be desirable to incorporate an access path to the on-chip RAM into the processor pipeline. However, there are a number of design constraints which are normally imposed on the design of the processor and which may restrict the way in which pipelined access to on-chip memory can be implemented. Design constraints of particular relevance are as follows:
- Blocks of RAM are often synchronous, that is, they have an input register which contains the address, write data and read/write controls for the current cycle.
- Systems may be constrained to use a single clock, with all registers being clocked on the rising edge of the clock.

The main implication of the above constraints is that a pipelined access to a block of RAM must start at the rising edge of the pipeline clock, and therefore the address, write-data, and read/write controls must be determined before the end of the previous pipeline stage. When accessing a block of on-chip memory, the physical address of the required memory location must therefore be available before the end of the pipeline stage immediately preceding the stage which accesses on-chip memory. To perform full address translation typically requires either a full pipeline stage or a significant part of a pipeline stage. The address translation is preceded by an operation in which the virtual address is computed, for example by adding the contents of a register to a literal value or to the contents of another register. The address computation and full address translation operations would normally exceed the pipeline clock by a significant margin and therefore could not be implemented in a single pipeline stage. The resulting (un-optimised) sequence of pipeline stages for on-chip memory access are shown in Figure 4.

By contrast, since cache memory is not usually bound by the above constraints, it may be possible to access on-chip cache memory in the pipeline stage following the address computation stage, i.e. one stage earlier than the on-chip RAM stage shown in Figure 4. For example, if the size of the cache is less than the size of a virtual memory page, then the lower order bits of the virtual address can be used to access the cache memory because those bits are the same for the virtual address and physical address.

In embodiments of the present invention, the time taken for translating the address for on-chip RAM is reduced. This is done by providing additional logic in the pipeline stage that computes the virtual address to determine which page of on-chip memory should be accessed, on the assumption that an on-chip access will taken place. In this way, the time taken for reading from on-chip memory can be reduced. Furthermore, in embodiments of the invention, a processor with both on-chip cache and on-chip RAM is arranged so that data can be returned from a load instruction at the same point in the pipeline regardless of whether it is obtained from the cache or the on-chip RAM.

### First embodiment

In a first embodiment of an address translation technique according to the present invention, in order to simplify the logic required to derive the physical address from the virtual address, a constraint is imposed on the allocation of physical pages to virtual pages. The constraint is that no two virtual pages can be mapped to on-chip memory at the same time if a small and arbitrarily chosen subset of their virtual address bits are the same. This subset would typically consist of *n* bits, where the number of physical pages in the on-chip memory is 2^{*n*}, so that all of the physical pages could be mapped by at least one virtual page. These bits are referred to herein as the partial virtual frame number.

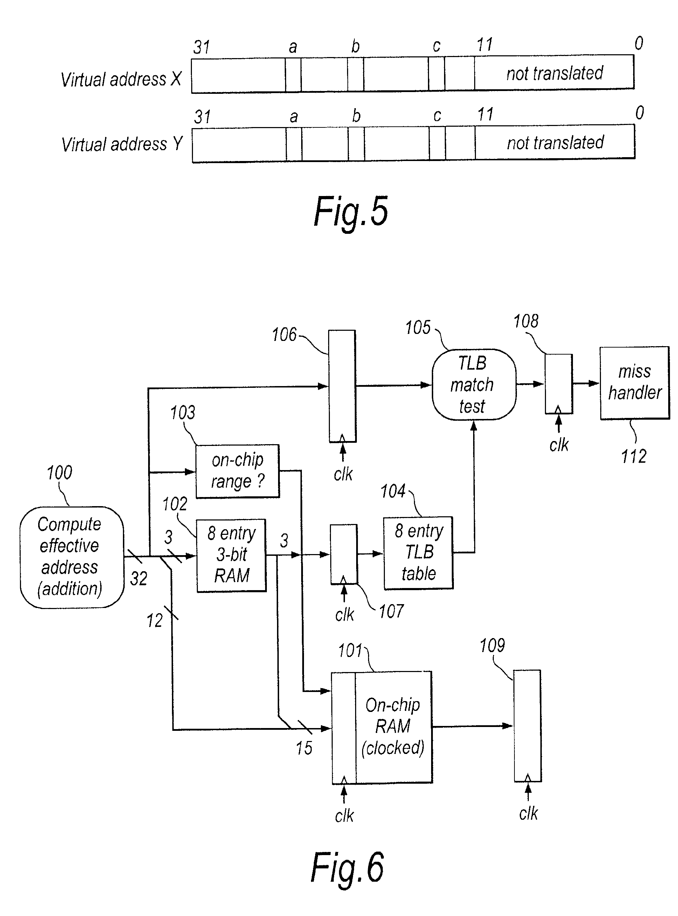

As an example, two virtual addresses, X and Y, are shown in Figure 5. Within the upper bits, three bits have been highlighted (bits a, b and c). If these bits are identical in X and Y, then addresses X and Y cannot be held in the translation cache simultaneously.

The chosen subset of *n* virtual address bits, where n = 3 in this example, can be used to look up one of the physical pages in the on-chip memory using the *n* least significant bits of the physical frame number (bits 12 to 14 of the physical address, in this example). These bits are referred to herein as the partial physical frame number. On the assumption that the virtual page is actually mapped to a physical page in the on-chip memory, access to the on-chip memory can then be started before the full translation is completed.

In the first embodiment, a partial lookup table is maintained which is used to look up the partial physical frame numbers. The partial lookup table is a table of 2^{*n*}, *n*-bit partial physical frame numbers which is indexed by the chosen subset of *n* virtual address bits. A partial physical address is then formed from the partial frame number, together with the offset bits of the virtual address (bits 0 to 11 in the above example). This partial physical address is used to access the memory location in the on-chip memory having that address.

If only on-chip memory were to be accessed, then the speculative address would be confirmed if the selected entry in the partial lookup table matched the original virtual address. However, if virtual addresses are also to be translated to off-chip memory (where one might expect a much larger number of physical pages to exist) then many virtual pages would map to each entry in the partial lookup table. Thus, in this case, a check needs to be carried out to determine whether the speculative address was correct.

In this embodiment, in order to check that the speculative address was correct, a cache of the PTEs for the on-chip addresses is maintained. This cache is referred to herein as the full lookup table. The full lookup table is accessed in parallel with accessing on-chip memory, in order to obtain the (full) virtual frame number corresponding to the page of on-chip memory that is being accessed. The virtual frame number of the selected PTE is compared with the virtual address, and if the two match then the speculative mapping was correct.

The present technique is based on the fact that it is possible to infer an address, and then to read from on-chip memory in the hope that the address is correct. A full translation takes place in parallel with the read operation to check whether the address is actually correct. If the address is incorrect then the data is discarded. This kind of speculative access can take place for read operations without fear of corrupting any data. For write operations it may be preferred to delay the writing until it is certain that the address is correct. However, if it is certain that the area of memory being written to does not contain any valid data, then a write operation can also be started before full address translation has taken place. For simplicity, the following description refers to read operations, but it will be appreciated that in appropriate circumstances write operations may also be performed.

Parts of a processor for accessing on-chip memory in the first embodiment are shown schematically in Figure 6. Referring to Figure 6, the processor comprises address computation unit 100, partial lookup table 102, address range checker 103 (optional), virtual address register 106, pipeline register 107, synchronous on-chip RAM 101, full lookup table 104, address comparator 105, hit/miss register 108, data register 109, and miss handler 112.

In operation, address computation unit 100 produces, in a given clock cycle, a virtual address which may address any location in the full 32 bit address range.

In the same clock cycle, bits 12, 13 and 14 (in this example) of the virtual address are used to select one of eight 3-bit partial frame numbers from the partial lookup table 102, which in this example is an 8-entry 3-bit non-synchronous RAM. In parallel with this, address range checker 103 may optionally determine whether the virtual address is in the legal range for on-chip memory accesses.

At the end of the clock cycle, the virtual address is captured in pipeline register 106, and the partial physical frame number is captured in pipeline register 107. At the same time, a 15 bit partial physical address is formed by appending the 12 least significant bits of the virtual address with the 3-bit partial frame number read from the partial lookup table 102. The on-chip range detection logic 103 may optionally be used to de-assert the read-enable input to the on-chip RAM 101. The 15-bit partial physical address and the optional read-enable input are registered at the input to the on-chip RAM 101.

In each clock cycle, data is read from or written to the on-chip RAM in accordance with the partial physical address produced in the previous clock cycle. The partial physical frame number stored in register 107 is used to select one of the eight PTEs stored in the full lookup table 104. The virtual frame number held in the selected PTE is compared with bits 12 to 31 of the virtual address held in register 106, and the valid bit in the PTE is checked. If the virtual address stored in register 106 does not correspond to the virtual frame number in the selected PTE, or if the selected PTE is invalid, then a miss occurred and the data read from on-chip RAM is invalid. The hit/miss register 108 is then reset to indicate that a miss occurred.

Otherwise, the data read from on-chip RAM is the data that is required, and it can be used as normal. In this case the hit/miss register 108 is set to indicate that a hit occurred.

If the hit/miss register 108 indicates that a miss occurred, then the following action is taken:
- The data held in register 109 is discarded or ignored.
- A physical page in the on-chip memory is allocated to the virtual page containing the virtual address generated by the address computation unit.
- If the newly-allocated physical page is already mapped by virtual memory, then the contents of that physical page are stored elsewhere in memory.
- The new contents of the physical page (which correspond to the virtual page) are loaded into the physical page.
- The partial lookup table 102 and the full lookup table 104 are updated.

The assignment of a new physical page and the subsequent updating of the memory and the lookup tables are carried out by the miss handler 112, which may be implemented in either hardware or software, or both. When an entry in the partial lookup table 102 is loaded, bits 12, 13 and 14 of the base address of the virtual page to be mapped are used to select an entry in the partial lookup table. This entry is overwritten with bits 12, 13 and 14 of the address of the corresponding physical page. At the same time, bits 12, 13 and 14 of the base address of the virtual address to be mapped are used to select an entry in the full lookup table 104, and the full virtual frame number is written to that location in the full lookup table. This guarantees that any previously mapped virtual address which shares bits 12, 13 and 14 in common with the new virtual address will no longer be mapped.

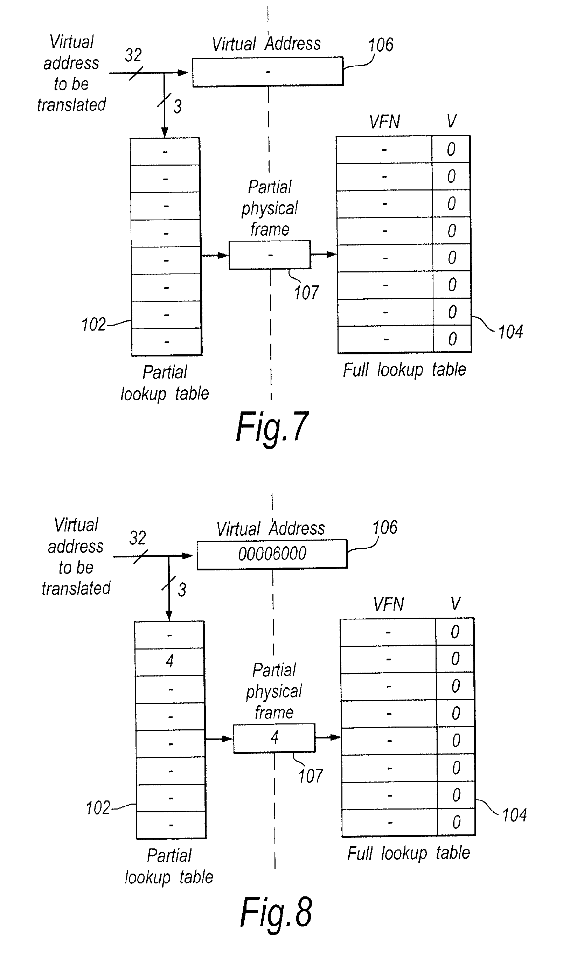

An example of the operation of the first embodiment will now be described with reference to Figures 7 to 13. Figures 7 to 13 are representations of the contents of the partial lookup table 102, the full lookup table 104, the virtual address register 106 and the pipeline register 107. The figures also show a virtual address with three bits extracted and used to index into the partial lookup table. Entries in the tables marked "-" are "don't care" cases. These may contain an undefined value and the scheme will still operate correctly.

At the end of each clock cycle the incoming virtual address is stored in the virtual address register 106 and the partial physical frame number is stored in the pipeline register 107. In the next clock cycle the value in the partial lookup table is used to select one row of the full lookup table 104 containing the virtual frame number of the virtual page which is mapped to on-chip memory at the page number given by the contents of the partial lookup table. There is also a valid bit, V, which is set to 1 for a valid mapping and 0 for an invalid mapping.

Figure 7 shows the state of the partial lookup table 102 and the full lookup table 104 after reset. On reset all valid bits in the full lookup table 104 are set to 0. This ensures that no on-chip memory is initially mapped.

Figure 8 illustrates the situation when an address is presented for translation following a reset. This case no on-chip memory is mapped and all valid bits in the lookup table are set to 0. In Figure 8, an address 00006000 (hex) is present for translation. It is assumed that entry 6 in the partial lookup table contains the random value 4. That value is read out and is stored in the pipeline register 107. During the next clock cycle, row 4 of the full lookup table is read and it is discovered that the V bit is 0. This results in a miss as there is no valid translation for virtual address 00006000 in the translation tables.

In response to a miss, the miss handler 112 loads translation table entries into the partial and full lookup tables so that the required virtual address can be subsequently translated. The miss handler needs to know the virtual address and the physical address that it is mapped to. In this example, it uses bits 12, 13 and 14 of the virtual address to select a row in the partial lookup table, and bits 12, 13 and 14 of the corresponding physical address to select a row in the full lookup table. Bits 12, 13 and 14 of the physical address are then loaded into the selected row of the partial lookup table. At the same time, bits 12 to 31 of the virtual address are loaded into the VFN field of the selected row in the full lookup table, and the associated V bit is set to 1.

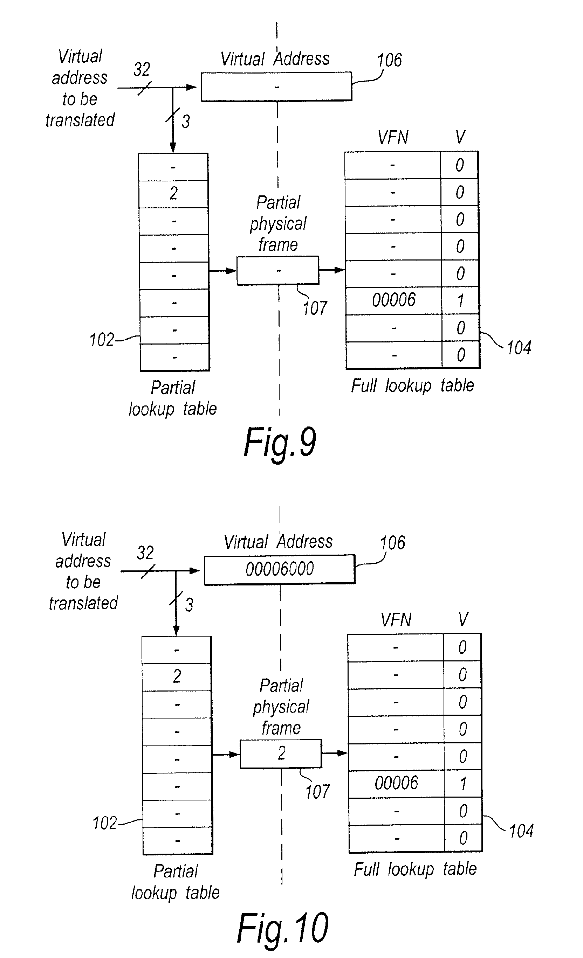

Figure 9 shows the state of the translation logic after loading the translation entries. In this example, it is assumed that the virtual address 00006000 maps to the on-chip memory at physical address 10002000.
Hence, row 6 of the partial lookup table is loaded with the value 2, and row 2 of the full lookup table is loaded with the value 00006.

Figure 10 shows the situation if the original read operation shown in Figure 8 is repeated after the page table entries have been loaded. The output from the partial lookup table (in this case, the value 2) is concatenated with bits 0 to 11 of the virtual address and is used as the read address of the on-chip memory. The output of the partial lookup table is also stored in the pipeline register 107.

During the next pipeline period, row 2 of the full lookup table 104 is read and the value stored in the VFN field of that row (in this case, the value 00006) is compared with the frame number obtained from the virtual address stored in the pipeline register. Since these values are identical, and the V bit in row 2 is set to 1, a hit is registered in the hit/miss register 108, and the data read from the on-chip memory in parallel with the full lookup table access can be used by the processor.

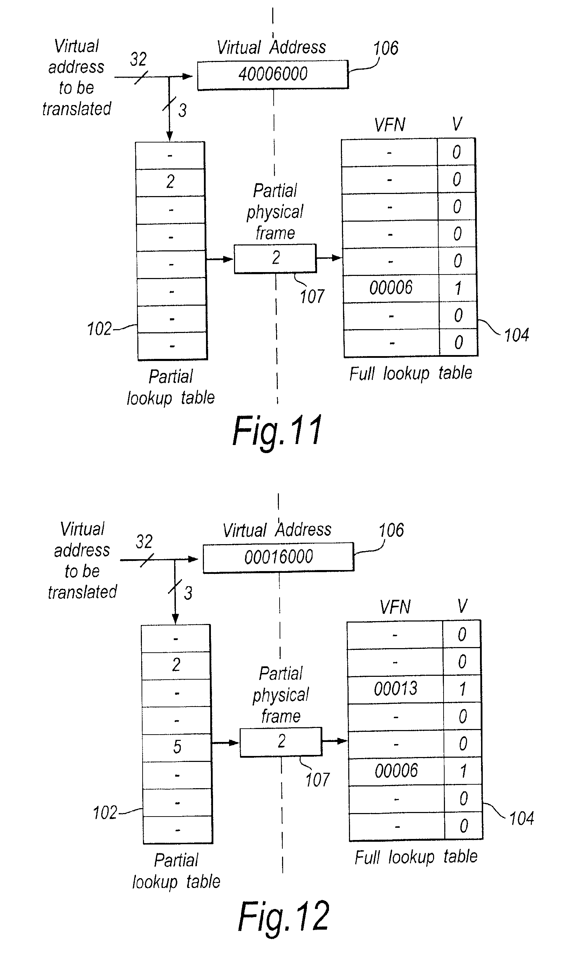

Figure 11 shows an example of a situation where a virtual address is initially assumed to map to on-chip memory, but in fact maps to external memory. In this example, the contents of the lookup table are assumed to be the same as in Figure 10, but virtual address 40006000 is presented for translation. As with the example shown in figure 10, row 6 of the partial lookup table 102 is selected. The value stored in row 6 is concatenated with bits 0 to 11 of the virtual address to obtain the read address of the on-chip memory. The value stored in row 6 is also registered in the pipeline register 107.

During the next pipeline period, row 2 of the full lookup table 104 is read and the value stored in the VFN field of that row (in this case, the value 00006) is compared with the frame number obtained from the virtual address stored in the pipeline register (in this case the value 40006). Since those values are not identical, a miss is registered in hit/miss register 108, and the data read from the on-chip memory is ignored or discarded. The miss will not result in the translation tables being updated, as the miss handler can determine that the required physical address is not in on-chip memory. Another translation mechanism, such as a conventional fully-associative cache of PTEs, is provided to handle the translation of addresses that do not map to on-chip RAM.

Figure 12 shows an example of a situation where a virtual page of on-chip memory indexes to the same location in the translation tables as a page which is already mapped. In figure 12, it is assumed that the system software decides to map virtual address 00016000 to physical address 10005000. This mapping could in principle coexist with the existing mapping from 00006000 to 10002000. However, because of the constraint that no two virtual pages can be mapped at the same time if bits 12, 13 and 14 of their virtual address bits are the same, these two mappings are not allowed to coexist.

When virtual address 00016000 is presented to the translation mechanism, row 6 of the partial lookup table is selected. This yields a partial physical frame of 2. In turn this selects row 2 of the full lookup table, which yields a valid VFN of 00006. As this does not match the VFN in the pipeline register (which is 00016) the translation mechanism records a TLB miss.

The miss handler 112 then decides that 00016000 should be mapped to on-chip memory at physical address 10005000. To illustrate what happens when an existing translation is evicted, another translation from 00013000 to 10005000 is shown as present in the tables. This corresponds to the case where the system software shares the physical memory resource between two virtual pages, only one of which has a valid mapping to that physical page at a time. The miss handler 112 stores the contents of physical page 10005 (corresponding to virtual page 00013) elsewhere in memory, and then loads the new contents of page 10005 (corresponding to virtual page 00016) from the locations elsewhere in memory where they have been stored. During this process the page is marked as invalid, to prevent any use of the physical page. When the process is complete, the new mapping is written to the translation tables.

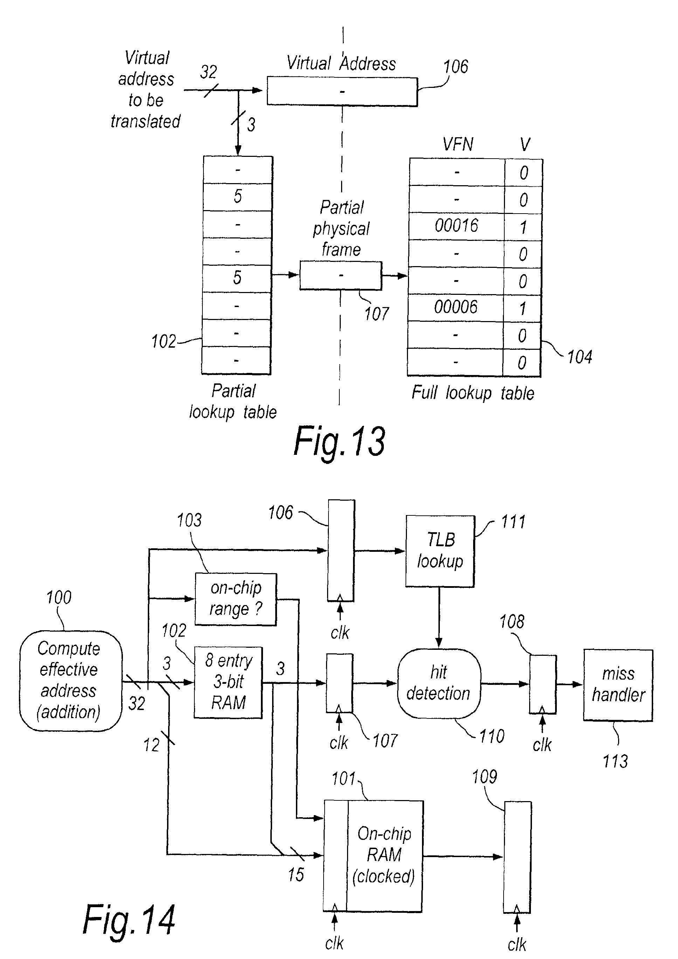

Figure 13 shows the state of the translation tables after the new mapping has been written. It can be seen that if virtual address 00016000 is presented then row 6 of the partial lookup table will be selected. This will, in turn, select row 5 of the full lookup table and yield a valid VFN of 00016. This will therefore result in a hit.

It will be noted that row 3 of the partial lookup table still contains the value 5, and row 2 of the full lookup table still contains the value 00006. However, any virtual address which selects row 3 of the partial lookup table will have bits 12, 13 and 14 set to 1, 1 and 0 respectively, and such an address can never match with row 5 of the full lookup table, which has those bits currently set to 0, 1 and 1 respectively, and thus a miss will always be recorded. Similarly, row 2 of the full lookup table can never be accessed unless a new translation which maps to physical frame 10002 is loaded into the translation tables. This act of writing such a translation would make row 2 of the full lookup table accessible, but would also rewrite the contents of row 2 to the correct value for the new translation.

### Second embodiment

In a second embodiment of the present invention, a speculative address translation takes place in a similar way to in the first embodiment, except that, instead of having a directly-indexed table of translation entries covering just the pages of on-chip memory, an associatively-indexed TLB is used in conjunction with a hit detector, which determines whether on-chip memory addresses were correctly assumed.

Parts of a processor for accessing on-chip memory in the second embodiment are shown schematically in Figure 14. Referring to Figure 14, the processor comprises address computation unit 100, partial lookup table 102, address range checker 103 (optional), virtual address register 106, pipeline register 107, synchronous on-chip RAM 101, hit/miss register 108, data register 109, TLB lookup logic 111, hit detector 110 and miss handler 113. Parts of the processor which are common with the first embodiment are given the same reference numerals.

In operation, as in the first embodiment, the virtual address is first computed, and then presented to the 8-entry 3-bit RAM 102. Optionally, the virtual address is checked by the on-chip range logic 103 to determine whether the request could possibly access on-chip memory. If the answer is "no" then there is no need to perform an on-chip memory access. The output from the 3-bit RAM 102 is concatenated with the lower 12 bits of the virtual address and is registered at the input to the on-chip RAM 101, along with the enable signal if appropriate. The 3-bit output from the RAM 102 is also registered separately for use in the following pipeline stage.

In parallel with accessing data in the on-chip memory, the virtual address is presented to the TLB lookup logic 111. This is a cache of PTEs which is searched associatively using the virtual address presented for checking. If the presented virtual address is mapped by any PTE in the TLB, then that PTE is read from the TLB and is made available at the TLB output. The TLB output contains the virtual frame number and partial frame number of the matching translation, together with a validating flag *tlb_hik*, which is false if no match is found.

The hit detection logic 110 performs two checks. Firstly, it compares bits 12, 13 and 14 of the partial frame number at the output of the TLB with the predicted partial physical frame stored in pipeline register 107, producing a *prediction_hit* signal. Secondly, and in parallel, it decodes the partial frame number to determine whether the physical address is within the range allotted to on-chip memory, producing an *is_physical* signal. The status of the translation is determined using the following rules.
- If *tlb_hit* is false then the translation is invalid, and a TLB miss is reported in pipeline register 108.
- If *tlb_hit* is true, but *is_physical* is false, then a TLB miss is reported. This corresponds to the case where the TLB translates an address that is either held externally or in a separate cache memory.
- If *tlb_hit* is true, and *is_physical* is true, but *prediction_hit* is false, then a TLB miss is reported in pipeline register 108. This case should not normally arise, but can be dealt with in the same way as other TLB misses (i.e. by reloading a TLB entry).
- If *tlb_hit* is true, *is_physical* is true, and *prediction_hit* is true, then a TLB hit is reported in pipeline register 108, and the speculative memory access was correct.

If a TLB miss is reported in pipeline register 108 then any data stored in register 109 is discarded. Miss handler 113 then allocates a page in the on-chip memory to the virtual page containing the virtual address generated by the address computation unit. If necessary, the contents of the newly--allocated physical page are stored elsewhere in memory, and the new contents of the physical page (which correspond to the virtual page) are loaded into the physical page. The entries in the partial lookup table 102 and TLB lookup table 111 are then updated.

When a TLB entry is loaded, the miss handler 113 decodes the physical address to determine whether it is within the range of on-chip memory addresses. If it is, then bits 12, 13 and 14 of the new PFN are written to the 8-entry 3-bit RAM 102 at the location indexed by bits 12, 13 and 14 of the virtual address.

It will be understood that the present invention has been described above purely by way of example, and modifications of detail can be made within the scope of the invention.

While the above description relates, by way of example, to a VLIW processor, it will be appreciated that the present invention is equally applicable to other processors, such as a reduced instruction set processor (RISC), a digital signal processor (DSP) or any other type of processor. A processor embodying the present invention may be included as a processor "core" in a highly-integrated "system-on-a-chip" (SOC) for use in multimedia applications, network routers, video mobile phones, intelligent automobiles, digital television, voice recognition, 3D games, etc.

## Claims

1. A processor which is arranged to generate virtual addresses for conversion into physical addresses for accessing physical memory, the physical memory comprising a first memory portion and a second memory portion which are part of the same memory level, the processor comprising:
generating means for generating a virtual address;
converting means for converting part of the virtual address into a partial physical address; and
accessing means for accessing memory in the first memory portion using the partial physical address.

2. A processor according to claim 1 wherein the partial physical address is sufficient to identify uniquely a memory location in the first memory portion, but not in the whole of the physical memory.

3. A processor according to claim 1 or 2, wherein an address comprises a frame number and an offset, the offset being the same for a corresponding virtual address and physical address, and wherein the partial physical address comprises part of the physical frame number and the offset.

4. A processor according to claim 3 wherein the converting means comprises a lookup table, an entry in the lookup table comprising part of the frame number of a virtual address and part of the frame number of the physical address.

5. A processor according to any of the preceding claims further comprising verifying means for verifying that a physical address of memory accessed by the accessing means corresponds to the virtual address generated by the generating means.

6. A processor according to claim 5 further comprising allocating means for allocating a virtual address to a physical address in the first memory portion in response to an output from the verifying means.

7. A processor according to claim 6, wherein the allocating means is arranged to allocate a page of virtual memory to a page of physical memory in the first memory portion.

8. A processor according to claim 7, wherein the allocating means is arranged such that no two virtual pages can be mapped to the first memory portion at the same time if they have addresses in which a given subset of the address bits are the same.

9. A processor according to any of claims 6 to 8, further comprising means for updating the converting means when a virtual address is allocated to a physical address.

10. A processor according to any of claims 6 to 9, further comprising means for updating the verifying means when a virtual address is allocated to a physical address.

11. A processor according to any of claims 5 to 10, wherein the verifying means comprises means for converting the partial physical address into at least part of a virtual address, and means for comparing the at least part of the virtual address with the virtual address generated by the generating means.

12. A processor according to claim 11, wherein the means for converting the partial physical address comprises a lookup table, an entry in the lookup table comprising a partial physical frame number and a virtual frame number.

13. A processor according to any of claims 5 to 12, wherein the verifying means comprises means for converting the virtual address generated by the generating means into at least part of a physical address, and means for comparing the at least part of the physical address with the physical address of memory accessed by the accessing means.

14. A processor according to claim 13, wherein the means for converting the virtual address comprises a lookup table, an entry in the lookup table comprising a virtual frame number and a corresponding physical. frame number.

15. A processor according to any of claims 5 to 14 wherein the processor is arranged to ignore or to discard data read from memory if the verifying means determines that a physical address of memory from which data is read does not correspond to the virtual address generated by the generating means.

16. A processor according to any of the preceding claims further comprising means for determining whether the virtual address generated by the generating means is within a range of addresses of the first memory portion, and means for disabling access to the first memory portion if the virtual address is outside of the range.

17. A processor according to any of the preceding claims wherein the processor is arranged to operate on successive clock cycles, and the converting means is arranged to convert part of the virtual address into the partial physical address in the same clock cycle as the generating means generates the virtual address.

18. A processor according to claim 5, or any of claims 6 to 17 when dependent on claim 5, wherein the processor is arranged to operate on successive clock cycles, and the verifying means is arranged to verify that a physical address of memory accessed by the accessing means corresponds to the virtual address generated by the generating means in the same clock cycle as the accessing means accesses the memory in the first memory portion.

19. A processor according to any of the preceding claims wherein the processor is a pipelined processor and the means for accessing memory is part of the processor pipeline.

20. A system-on-chip device comprising:
a processor according to any of the preceding claims, said first memory portion being included in the system-on-chip device; and
an interface for accessing said second memory portion, said second memory portion being provided externally of the device.

21. A device according to claim 20 wherein the first memory portion is on-chip RAM, such as synchronous RAM.

22. A method of accessing memory in a processor which generates virtual addresses for conversion into physical addresses for accessing physical memory, the physical memory comprising a first memory portion and a second memory portion which are part of the same memory level, the method comprising the steps of:
generating a virtual address;
converting part of the virtual address into a partial physical address; and
accessing memory in the first memory portion using the partial physical address.

23. A method according to claim 22 further comprising verifying that the physical address of the memory accessed in the accessing step corresponds to the virtual address generated in the generating step.
